# EUROPEAN PATENT SPECIFICATION

(11) **EP 2 807 532 B1**
(45) Date of publication and mention of the grant of the patent: **17.04.2019**
(21) Application number: 12702697.9
(22) Date of filing: 23.01.2012
(51) Int. Cl.: G06F 1/32, G06F 3/0488

(54) **ELECTRONIC DEVICE AND METHOD OF CONTROLLING A DISPLAY**
ELEKTRONISCHE VORRICHTUNG UND VERFAHREN ZUR STEUERUNG EINER ANZEIGE
DISPOSITIF ÉLECTRONIQUE ET PROCÉDÉ DE COMMANDE D'UN AFFICHAGE

(43) Date of publication of application: 03.12.2014
(73) Proprietor: BlackBerry Limited, Waterloo, ON N2K 0A7 (CA)
(72) Inventor: RYDENHAG, Tobias, SE-211 40 Malmo (SE); LESSING, Simon, SE-211 40 Malmo (SE); LINDSAY, Donald, James, Waterloo, Ontario N2L 3W8 (CA)
(74) Representative: Fennell, Gareth Charles
(86) International application number: PCT/US2012/022197
(87) International publication number: WO 2013/112126

(56) References cited:
- EP-A2- 2 109 030
- US-A1- 2010 171 753
- US-A1- 2012 013 552

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

US 2010/0171753A1 describes a method and apparatus for interacting with a turned off display of an electronic apparatus. When the display is turned off, a gesture issued by a user on the display is recognised, and the area touched by the user is turned on to show some information. The entire display will be turned on, if the area touched by the user is bigger than a given threshold.

EP2109030A2 describes a mobile terminal and a screen control method thereof. When the screen is turned off, a searchlight function is implemented wherein the brightness of a given area corresponding to the position of a user's finger approaching the screen is increased. In another embodiment, the size of the area corresponding to the position of the user's finger approaching the screen is increased, when the distance from finger to the screen is reduced. The screen is turned on, if the finger touches the screen.

US 2012/0013552A1 describes a touch-sensitive device and a related display brightness control method.

Improvements in devices with touch-sensitive displays are desirable.

### Brief Description of the Drawings

FIG. 1 is a block diagram of an electronic device such as a portable electronic device in accordance with the disclosure.
FIG. 2 is a front view of a portable electronic device in accordance with the disclosure.
FIG. 3 through FIG. 7 illustrate examples of progressively displaying information from a low-power condition on a portable electronic device in accordance with the disclosure.
FIG. 8 is a flowchart illustrating a method of controlling a touch-sensitive display in accordance with the disclosure.
FIG. 9 through FIG. 14 illustrate examples of progressively displaying information from a low-power condition on a portable electronic device in accordance with the disclosure.

### Detailed Description

The following describes an apparatus for and method of controlling a display. A gesture is detected while the display is in a low-power condition also referred to as a sleep state. The device may or may not be locked in the low-power condition. Informational icons to be displayed are identified, such as icons associated notifications of application information, such as email or text messaging, or device information, such as time or battery level. In one example, while the gesture continues to be detected, e.g., by a touch-sensitive display, the display is progressively illuminated while displaying the identified informational icons. The process may be reversed, for example, by changing the direction of the gesture or by releasing contact with the touch-sensitive display.

A gesture includes a static or moving touch detected by a touch-sensitive display, a 3-dimensional (3D) spatial movement detected by spatial sensors, a touch or 3D spatial movement detected by an optical sensor, an audible input, including a voice command, detected by a speech or audible recognition device, depression of a physical key or button, and so forth. Other types of gestures may be successfully utilized.

Although many examples described herein refer to a gesture detected by a touch-sensitive display, other methods of gesture detection may be utilized. For example, a gesture may be a generalized trajectory description characterized as a sequence of 3D points in time, and as such many different sensors may be utilized to detect such a gesture. The gesture may be performed by moving a portable electronic device or moving one or more body parts, such as fingers or thumbs as a 3D spatial gesture. For example, sensors, such as an accelerometer/gyroscope, or proximity sensors, or time-of-flight cameras may detect such gestures. Gesture recognition and detection techniques of this type are known.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

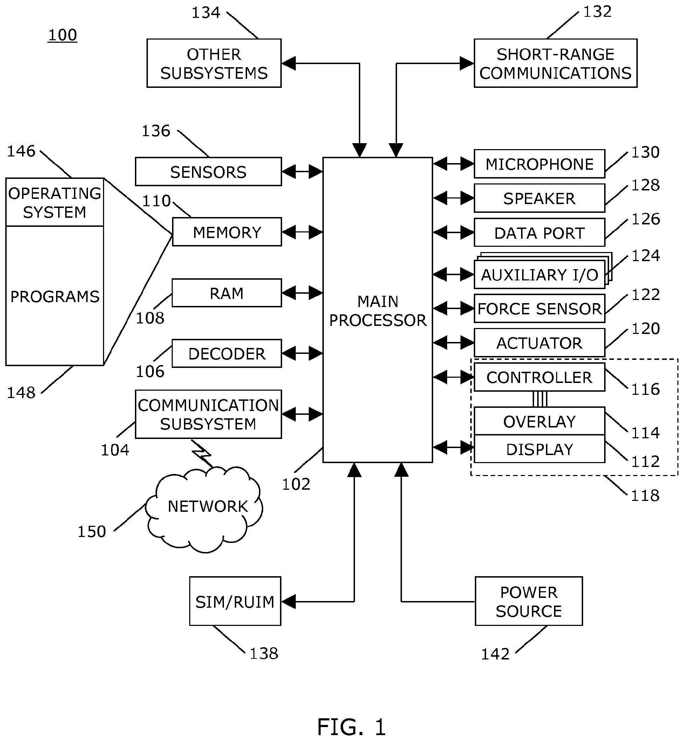

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 optionally including a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. Input via a graphical user interface is provided via the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The display 112 may be any suitable type of display, including a liquid crystal display (LCD), an organic light-emitting diode (OLED) display, and so forth. The processor 102 may interact with an one or more spatial sensors 136, including accelerometers or gyroscopes that may be utilized to detect direction of gravitational forces or gravity-induced reaction forces, proximity sensors, optical sensors, and so forth.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts, touch events or gestures, may be detected by the touch-sensitive display 118. The processor 102 may determine attributes of the touch, including a location of a touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. Multiple simultaneous touches may be detected.

An accelerometer or gyroscope 136 may be utilized to detect 3D spatial gestures. A sequence of acceleration values may be detected in the different spatial dimensions as a function of time and constitute trajectory information that can be recognized as a gesture. For example, a quick flick or tilt of the portable electronic device 100 are examples of detectable gestures. A 3D spatial gesture includes a continuous movement, a sequence of movements, and a series of continuous movements or sequences of movements. Proximity sensors, optical sensors, and/or cameras may be utilized to detect 3D spatial gestures comprising motion of objects spaced from the device 100. Scanning of any of these sensors or devices may take place every 100 to 500 ms during low-power condition or at any other suitable time period.

The actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

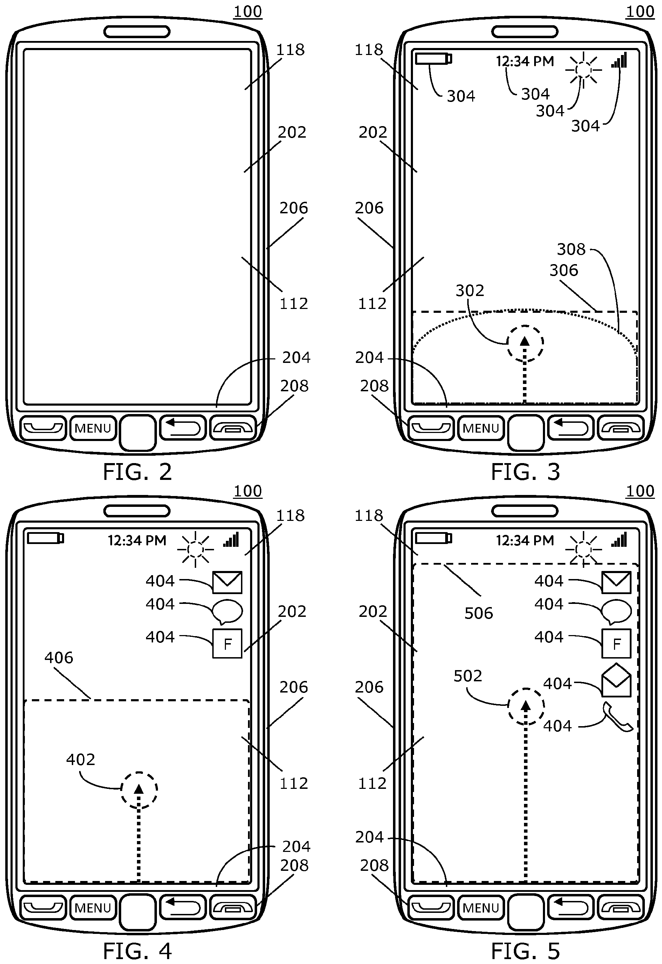

A front view of a portable electronic device is shown in FIG. 2. The touch-sensitive display 118 includes a display area 202 in which information may be displayed, and a non-display area 204 extending around the periphery of the display area. The display area 202 generally corresponds to the area of the display 112. Information is not displayed in the non-display area 204 by the display 112, which non-display area 204 is utilized to accommodate, for example, electronic traces or electrical connections, adhesives or other sealants, and/or protective coatings around the edges of the display area. The non-display area 204 may be referred to as an inactive area. The non-display area 204 is typically not part of the physical housing or frame 206 of the electronic device. Typically, no pixels of the display 112 are in the non-display area 204, thus no image can be displayed by the display 112 in the non-display area 204. Optionally, a secondary display, not part of the primary display 112, may be disposed under the non-display area 204. Touch sensors may be disposed in the non-display area 204, which touch sensors may be extended from the touch sensors in the display area or distinct or separate touch sensors from the touch sensors in the display area 202. A touch, including a gesture, may be associated with the display area 202, the non-display area 204, or both areas. The touch sensors may extend across substantially the entire non-display area 204 or may be disposed in only part of the non-display area 204. Touches may be detected, for example, starting in the non-display area 204 and continuing into the display area 202 or starting in the display area 202 and continuing into the non-display area 204, whether or not touch sensors are disposed in the non-display area 204. The portable electronic device 100 optionally includes a set of convenience keys or buttons 208, 908 that may be separate physical keys or buttons or virtual keys or buttons. When the electronic device 100 is in a low-power condition, which may be referred to as a "sleep" condition or state, no information is displayed on the touch-sensitive display. During a low-power condition, processes with the electronic device 100 are discontinued or operated at a slower speed and one or more hardware components may be powered-down or operated at a slower speed to conserve power or provide other advantages.

An example of progressively illuminating a display while displaying informational icons is shown in FIG. 3 through FIG. 5. In this portrait orientation example, a gesture is initially detected at or near the bottom of the touch-sensitive display 118 and continues to be detected along the path of the arrow. When the gesture is detected at the location 302 in FIG. 3, a small area 306 at the bottom of the display 118 is illuminated, and informational icons 304 related to device condition are displayed. The shape of the illuminated area may be a shape other than rectangular, such as the alternative curved area 308 that is similar to or simulates a glow of a sunrise.

The gesture continues to be detected as the gesture moves upward, as shown in FIG. 4. When the gesture is detected at the location 402 in FIG. 4, a larger area 406 at the bottom of the display 118 is illuminated, which area 406 is larger than the area 306, and informational icons 304 related to device condition are displayed in addition to informational icons 404 related to applications, such as email, text messaging, social networking, calendar, telephone, and so forth.

The gesture continues to be detected as the gesture continues to move upward, as shown in FIG. 5. When the gesture is detected at the location 502 in FIG. 5, a larger area 506 at the bottom of the display 118 is illuminated, which area 506 is larger than the area 406, and informational icons 304 related to device condition are displayed in addition to informational icons 404 related to applications. More informational icons 404 related to applications are displayed in FIG. 5 than in FIG. 4, illustrating that more informational icons are displayed as the gesture continues to be detected.

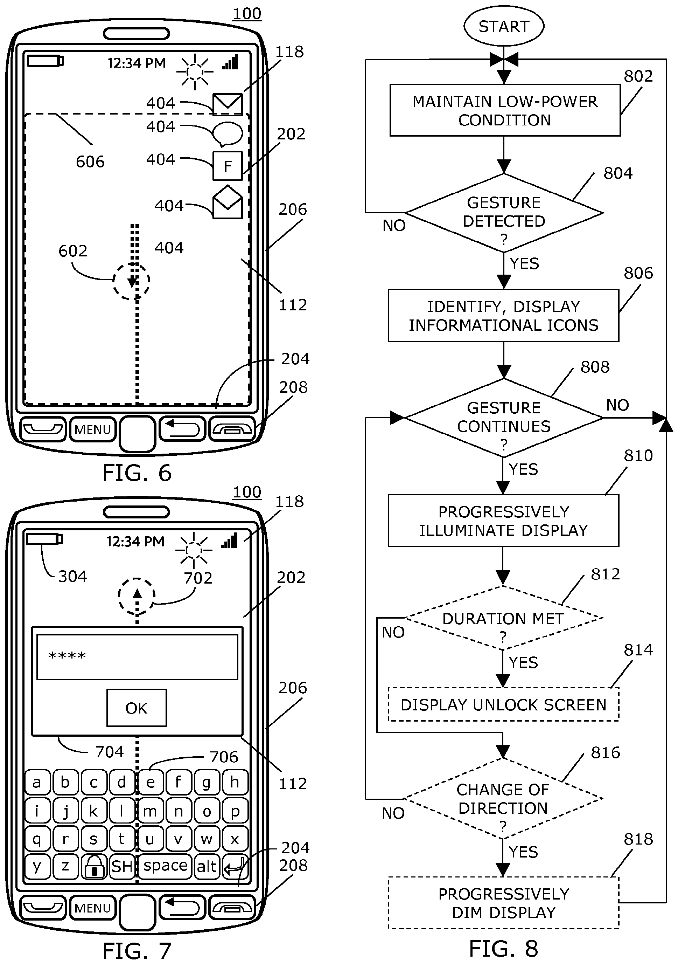

The gesture continues to be detected as the gesture reverses direction and continues downward to the location 602 shown in FIG. 6. The display 118 is progressively dimmed in this example as long as the direction of the gesture continues in the reverse direction. Fewer informational icons 404 are displayed in FIG. 6 than in FIG. 5, and the area of illumination 606 is smaller in FIG. 6 than in FIG. 5.

Alternatively, the gesture may continue upward from the bottom of the display until the gesture is detected at the touch location 702, which results in a gesture greater than or equal to a predetermined distance or length as shown in FIG. 7. An unlock option 704 is displayed in a window along with a keyboard 706 to facilitate entry of a password. In this example, the informational icons 304 related to device condition are displayed, although informational icons 404 related to applications are no longer displayed.

A flowchart illustrating a method of controlling a display such as a touch-sensitive display is shown in FIG. 8. The method may be carried out by software executed, for example, by the processor 102 of the electronic device, which may be a portable electronic device 100. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

The portable electronic device is maintained 802 in a low-power condition, for example, by displaying no information on the display 112 of the touch-sensitive display 118, e.g., the display 112 is blank or black with no pixels illuminated. The processing activities of the device 100 are typically significantly reduced during a low-power condition. Minimal touch sensing is active on the touch-sensitive display 118, such that power usage is minimal. For example, scanning of touch sensors may take place every 100 to 500 ms or at a reduced rate from active touch sensing when in low-power condition. While the display 112/touch-sensitive display 118 is in low-power condition, a gesture is detected 804 on the touch-sensitive display 118, which at least minimally wakes-up the device. The gesture may be a simple touch or a touch that moves. The gesture may be simple or complex. For example, the gesture may be a swipe that moves in a single direction along the display or a touch that hovers or is maintained at or near the same location. Any other gesture may be utilized. The gesture may begin anywhere on the touch-sensitive display 118, although advantage may be gained, for example, by detecting a touch starting at any edge of the display, such as the bottom of the display or a corner of the display. The gesture may be a series or sequence of taps on the touch-sensitive display 118. The location of the taps may or may not be relevant to detecting the gesture.

Informational icons 304, 404 are identified and displayed 806. Identifying informational icons 304, 404 includes, for example, identifying at least one notification to be displayed. Notifications include, for example, notice of a received email, notice of a text message, notice of a missed phone call, a calendar event, a social networking notice, device condition, and so forth. Device conditions include, for example, time of day, date, battery level, network signal strength indication, error condition, software problem, and so forth. Informational icons 304, 404 that are associated with each notification are identified and displayed, such as an envelope for email, a balloon for a text message, a phone for a missed call, an open envelope for a meeting invitation, and so forth. All of the informational icons 304, 404 identified at 806 may be displayed upon detection of the gesture. Alternatively, the informational icons 304, 404 may be progressively or gradually displayed while the gesture is continuously detected, e.g., the quantity of informational icons 304, 404 increases, such as one at a time as the gesture continues 808. Alternatively, the informational icons 304, 404 may be gradually displayed or revealed as the gesture is continuously detected. This effect may be achieved by progressively decreasing the transparency of the displayed informational icons 304, 404, e.g., starting with a transparent or ghosted version of the icon and gradually increasing the opacity of the icon 304, 404 until the informational icons 304, 404 are fully displayed. Transparency in this sense includes the visual effect of being able to see the background through the icons 304, 404. Increasing the opacity of the icon 304, 404 includes reducing the amount of background visible through the icon 304, 404 until to the background cannot be seen through the icon 304, 404 anymore.

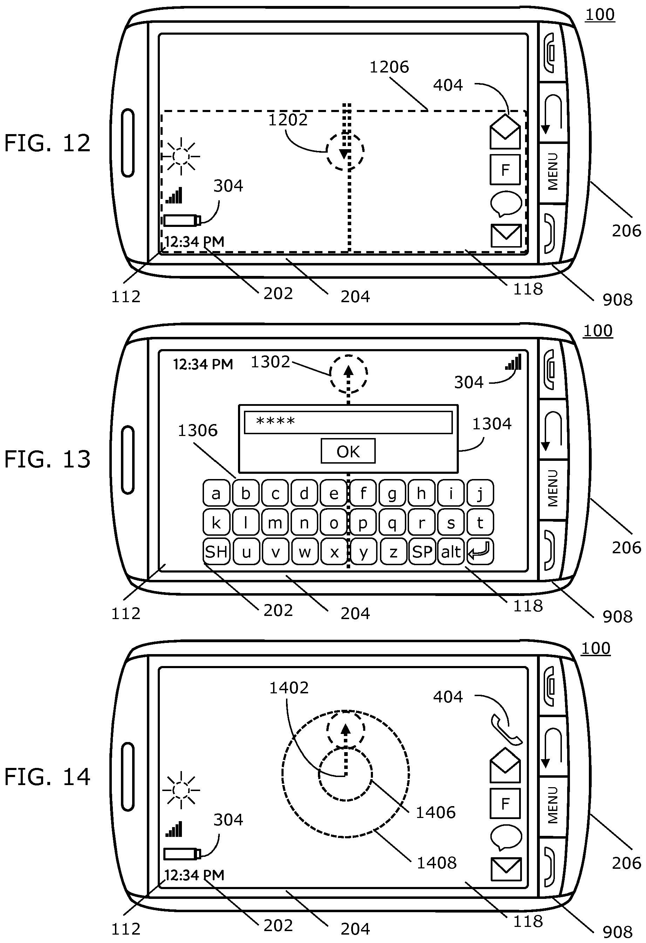

While detection of the gesture continues 808, the touch-sensitive display 118 is progressively illuminated 810 while displaying the identified informational icons 304, 404, such as described above. Detection of the gesture continuing includes detecting a continuation of the gesture's movement along the touch-sensitive display 118 and/or detecting a continuation of the gesture in time at or near a single location on the touch-sensitive display 118, e.g., a successive tap with little or no movement of the gesture. The gesture may include a combination of movement and holding of a touch at or near one location on the display 118. Progressively illuminating the display 118 may be performed in a number of ways. For example, the touch-sensitive display 118 may be illuminated beginning at the one end of the display and continuing toward an opposite end of the display, such as shown in the examples in FIG. 3 through FIG. 7 and FIG. 9 through FIG. 13. A more particular example of progressively illuminating includes a sunrise effect, where the touch-sensitive display 118 is first illuminated at the bottom of the display 118 and gradually illuminated more and more in a direction toward the top of the display 118 in a similar manner as a sunrise. The entire display may be fully lit at this point or optionally dimly lit, where continued detection of the gesture gradually increases brightness over most or all of the area of the touch-sensitive display 118. Alternatively, an image may be displayed on the display 118, and the brightness of the image may be gradually increased. Another form of progressively illuminating the display 118 comprises gradually illuminating the touch-sensitive display 118 beginning at a point, such as the center of the display 118 or the first detected touch location, and continuing to illuminate the display in at least one direction away from the point, such as shown in FIG. 14, which shows gradual illuminating in a gradually increasing circle or radially outward in all directions from a point on the display 118.

Optionally, when the duration of the gesture meets a predetermined threshold 812, such as a period of time or a distance, an unlock option or screen is displayed 814, such as shown in FIG. 7 or FIG. 13. At any time detection of the gesture ends, the illumination of the touch-sensitive display is discontinued. This discontinuance of illumination may be effectively instantaneous or immediate or may quickly fade to black, e.g., in 100 to 500 ms or less.

Another option includes progressively dimming the display 118 after the display 118 is illuminated. For example, upon detection 816 of a change in direction of the gesture, illumination of the touch-sensitive display 118 may be progressively reduced as the gesture continues. In a more specific example, the gesture may comprise a touch beginning at the bottom of the display 118 and moving toward the top of the display, followed by moving back toward the bottom of the display 118, such as when the user sees all or as many of the informational icons 304, 404 as desired. In this situation, the touch-sensitive display 118 is gradually illuminated until the touch is detected moving back toward the bottom of the display 118, at which time the display 118 is progressively dimmed 818 until the gesture ends (detection of the gesture does not continue), the display 118 fades to black, or the gesture changes direction again to progressively illuminate the display 118, in which case the process continues at 810. An end of the gesture may be discontinuation of detection of touch data on the touch-sensitive display 118, discontinuation of a recognizable 3D spatial gesture, or end of any other type of gesture. The gesture may be discontinued, for example, when a user gathered the information the user is interested in, such as time, date, notifications, and so forth. An end of the gesture returns the device 100 to the previous low-power or sleep condition.

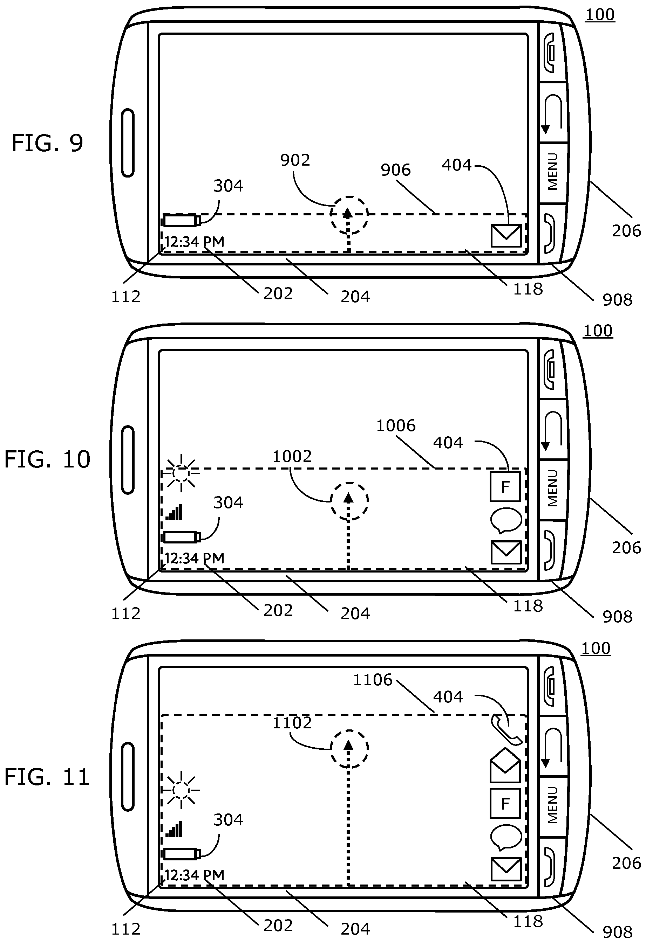

Another example of progressively illuminating a display while displaying informational icons is shown in FIG. 9 through FIG. 11. In this landscape orientation example, a gesture is initially detected at or near the bottom of the touch-sensitive display 118 and continues to be detected along the path of the arrow. When the gesture is detected at the location 902 in FIG. 9, a small area 906 at the bottom of the display 118 is illuminated, and informational icons 304 related to device condition and an informational icon 404 related to application are displayed.

The gesture continues to be detected as the gesture moves upward, as shown in FIG. 10. When the gesture is detected at the location 1002 in FIG. 10, a larger area 1006 at the bottom of the display 118 is illuminated, which area 1006 is larger than the area 906, and informational icons 304 related to device condition are displayed in addition to informational icons 404 related to applications. More informational icons 304 related to device condition and informational icons 404 related to applications are displayed in FIG. 10 than FIG. 9, as the gesture continues.

The gesture continues to be detected as the gesture continues to move upward, as shown in FIG. 11. When the gesture is detected at the location 1102 in FIG. 11, a larger area 1106 at the bottom of the display 118 is illuminated, which area 1106 is larger than the area 1006, and informational icons 304 related to device condition are displayed in addition to informational icons 404 related to applications. More informational icons 404 related to applications are displayed in FIG. 11 than in FIG. 10, illustrating that more informational icons are displayed as the gesture continues to be detected. One advantage of the examples of FIG. 9 through FIG. 13 is that the informational icons are displayed in the area where the display is illuminated, thereby reducing power on an OLED display, because a black OLED pixel consumes negligible power, or reducing the time needed for a user to obtain information from the informational icons.

The gesture continues to be detected as the gesture reverses direction and continues downward to the location 1202 shown in FIG. 12. The display 118 is progressively dimmed in this example as long as the direction of the gesture continues in the reverse direction. Fewer informational icons 404 are displayed in FIG. 12 than in FIG. 11, and the area of illumination 1206 is smaller in FIG. 6 than in FIG. 5.

Alternatively, the gesture may continue upward from the bottom of the display until the gesture is detected at the touch location 1302, which results in a gesture greater than or equal to a predetermined distance or length as shown in FIG. 13. An unlock option 1302 is displayed in a window along with a keyboard 1304 to facilitate entry of a password. In this example, the informational icons 304 related to device condition are displayed in a different location, although informational icons 404 related to applications are no longer displayed.

An alternative option is shown in FIG. 14, in which the illuminated area of the display 118 increases from a point, e.g., an origin 1402 of the gesture or the center of the display. As the gesture continues to be detected, the illuminated area increases in diameter, for example the smaller area 1406 occurs earlier in the gesture than the area 1408. The informational icons 304, 404 may be displayed all at once or increasing in number as the gesture continues to be detected.

Although more of the informational icons 304, 404 are displayed as the gesture continues in the above examples, such a gradual display of the informational icons 304, 404 is not essential. For example, upon first detection of the gesture, all of the identified informational icons 304, 404 may be displayed. Such display facilitates a quick and reversible look or peek at the informational icons 304, 404 without requiring completion or continuation of the gesture, and facilitates a quick view of information followed by a quick return to a low-power condition or blank screen.

The above examples illustrate an upward and/or downward gesture beginning at the bottom of the display as the device is oriented. Optionally, different gestures or gestures associates with different edges or sides or corners may be utilized, including static or non-moving gestures. The user may be provided with the option to select the type of gesture, location of gesture, and/or origin of gesture.

When utilizing a touch-sensitive display 118 to detect a gesture, the gesture may comprise a series of taps on the touch-sensitive display 118. The detection of successive taps is detection of continuation of the gesture. A threshold time period may be applied to the detection of the sequence of taps. This series of taps may facilitate the gradual nature of modifying the visual display of informational icons. For example, a first tap may result in activating the display 112 at a first brightness level. A second tap may result in activating the display 112 at a second brightness level, and a third tap may result in activating the display 112 at a third brightness level. The third brightness level may be comparable to the normal brightness level when the device is in full active mode. The number or quantity of taps may also affect the number of informational icons 304, 404 displayed. For example, one tap may result in displaying the time icon 304, two taps may result in displaying informational icons 404 related to applications, and three taps may result in displaying all informational icons 304, 404. Alternatively, one tap may result in displaying informational icons 304 related to device condition, two taps may result in displaying all informational icons 304,404, and three taps may result in returning the display 112 to the low-power condition. The taps may be detected on the display or non-display area and need not be associated with a specific location or the same location. The number of taps may be applied to the brightness level of the display, the quantity of informational icons 304, 404 displayed, or both.

In another example utilizing a touch-sensitive display 118, the gesture may comprise a hovering touch, which may include simply detecting presence of a touch anywhere on the display 118. In one example, detection of motion or movement of the touch is unnecessary, and detection of localized contact for a predetermined period of time is regarded as a gesture. Differing periods of time may be r correlated to different brightness levels. For example, a hovering touch exceeding a first duration may result in activating the display 112 at a first brightness level. The hovering touch continuing and exceeding a second duration may result in activating the display 112 at a second brightness level, and the hovering touch continuing and exceeding a third duration may result in activating the display 112 at a third brightness level. The third brightness level may be comparable to the normal brightness level when the device is in full active mode. The different durations may be entered by a user. The duration of the hovering touch may also be applied to the quantity of informational icons 304, 404 displayed. The duration of the hovering touch may be applied to the brightness level of the display, the quantity of informational icons 304, 404 displayed, or both.

Alternatively, the brightness levels may vary linearly as a function of the duration of the long press up to the level of the normal brightness level when the device is in full active mode. This gradual effect from a black screen until the gesture is no longer detected or normal brightness level is reached.

In another example, one or more infrared sensors may be utilized to detect a simplistic but specific gesture. For example, one or more infrared sensors may detect a hand waving across the display at a predetermined distance.

The gesture may be a combination of gesture types or a compound gesture. For example, the gesture may initially comprise a 3D spatial gesture or voice command that triggers initial wakening of the device 100 followed by a touch detected by the touch-sensitive display 118 as the continuation of the gesture, which causes gradual or progressive change in display of the informational icons 304, 404, gradual or progressive change in the brightness of the display, or both.

In one example, the informational icons 304, 404 may all be displayed upon detection of a gesture during low-power condition, and the display may be gradually illuminated as the gesture continues, thus gradually waking-up the device 100. Alternatively, the informational icons 304, 404 may be gradually displayed in quantity and/or transparency as the gesture continues.

In one example, upon initial detection of the gesture at the location 302 in FIG. 3, a first level of additional information is shown within area 306. For example, the time in another location/timezone may be displayed. As the gesture progresses to the location 402 in FIG. 4, a second level of information is shown in addition to the first level of information, within the illuminated area 406. For example, the weather conditions for the other location may be displayed.

Priority levels may be associated with the informational icons 304, 404 to control the order in which the informational icons are displayed when revealed gradually. For example, when multiple locations are of interest, prioritization of the information icons may be associated by importance of the locations to the user.

The illuminated areas 306, 406, 506, 606, 906, 1006, 1106, and 1206 in need not be rectangles, and may be any suitable shape, for example, semi-circular, circular, elliptical, or other shape including complex shapes.

Optionally, contrast levels of the image being displayed may be varied in order to achieve the same or similar result as progressively varying the brightness of the display.

Although information, such as informational icons, keys, or an unlock option, is shown displayed in particular locations in the example, the information may be displayed in any location on the display.

Although the method is advantageous for portable electronic devices due to the limited display size on a portable electronic device, such as a smartphone, the method may be applied to other electronic devices that have a larger display size.

The location of informational icons may be adjusted by the user. For example, the use may identify the quantity, order, or arrangement of informational icons to be displayed.

A method comprises, while a touch-sensitive display is in a low-power condition, detecting a gesture on the touch-sensitive display and identifying any informational icons to be displayed. While the gesture continues to be detected, the touch-sensitive display is progressively illuminated while displaying the identified informational icons. When the gesture comprises a touch at or near a single location on the display, detecting continuation of the gesture may comprise continually detecting the touch. A portable electronic device may comprise the touch-sensitive display.

A method comprises, while a portable electronic device is in a low-power condition, detecting, by the portable electronic device, a gesture. Any informational icons to be displayed are identified. The identified informational icons are displayed without fully illuminating a display of the portable electronic device. Discontinuation of the gesture may result in a return to the low-power condition in which the display is not illuminated. Displaying the identified informational icons may comprise illuminating the informational icons without illuminating a remainder of the display, e.g., an area of the display where the informational icons are not displayed.

Although the above examples illustrate various different features, the features of any example may be utilized with any other example unless the features conflict. For example, features of FIG. 2 through 7 may be utilized in a landscape orientation, and features of FIG. 9 through 14 may be utilized in a portrait orientation. Other features are interchangeable but are too numerous to identify briefly.

The terms left, right, top, bottom, and so forth are utilized herein for purpose of providing a perspective for reference but are not otherwise limiting.

Advantages of the method include providing the ability for the user to gain information from a device without requiring a full wake-up of the device at the normal brightness level of the device. Previously, when a device was asleep or locked, a notification that a new communication was received was viewable only after fully illuminating the display and awakening the device. When the user only wanted to check the time, the user was required to fully illuminate or wake-up the device. In both cases, fully awakening the device may be disadvantageous in terms of power consumption and time to access the desired information. In some situations, fully illuminating the device may be undesirable. For example, in dark locations, light could disrupt the user or other people, e.g., in a theatre, cinema, while in bed, and so forth. A gradual wake-up in these situations avoids unnecessary disruption, and possibly reduces power consumption. Advantageously, power consumption of an OLED display is reduced because a black OLED pixel consumes negligible power compared to a white OLED pixel. Therefore, by reducing the brightness levels and/or reducing the illuminated area of the display reduces power consumption.

Another advantage results from the reversible capability of this method. Either changing direction of the gesture or discontinuing the gesture results in the device returning to the low power condition by dimming the display. This dimming is a particular benefit for users who only want to perform a quick check on their device, e.g., device conditions and/or notifications, and who want to quickly return to the sleep state without requiring a time period to elapse. This capability is useful for users who forget to lock their device, which may result in unintended action of the device, such as "pocket dialing."

Furthermore, physical keys used to unlock devices are normally placed on top, bottom, or along the sides of devices. When a user desires to utilize one hand to operate the device, pushing unlock buttons may require a shift in grip or inability to operate the device with one hand. Many of the examples do not require a user to shift grip to proceed with operating the device.

The described embodiments are to be considered in all respects only as illustrative and not restrictive. The scope of the disclosure is, therefore, indicated by the appended claims rather than by the foregoing description.

## Claims

1. A method comprising:
while a portable electronic device including a display (118) is in a low-power condition (802), detecting (804) by the portable electronic device, a gesture that begins at a first end of the display and progresses toward a second end, opposite the first end of the display;
in response to detecting the gesture, progressively illuminating the display (810) from a state in which the display is not illuminated, by gradually increasing a size of an illuminated area (306) of the display from the first end of the display, at which the gesture began, toward the second end of the display, wherein the gesture controls the size of the illuminated area;
**characterised in that**
the illuminated area extends a full width of the display; and when detection of the gesture ends before the gesture meets a predetermined period of time or a predetermined distance (812),
progressively dimming the display (818) and returning to the low-power condition (802).

2. The method of claim 1, wherein the illuminated area is not illuminated immediately prior to detecting the gesture.

3. The method of any preceding claim, further comprising, upon detecting a change in direction (816) of the gesture, progressively reducing illumination of the display as the gesture continues.

4. The method of any preceding claim, wherein progressively illuminating comprises gradually increasing brightness of an image displayed on the display.

5. The method of any preceding claim, further comprising:
when the gesture moves in a first direction, progressively illuminating the display from a first end of the display toward a second end of the display;
when the gesture moves in a second direction, progressively reducing illumination of the display from the second end toward the first end.

6. The method of any preceding claim, further comprising identifying any informational icons (304, 404) to be displayed, wherein the identified informational icons are gradually displayed as the gesture continues.

7. The method of claim 6, wherein gradually displaying the identified informational icons comprises progressively increasing a quantity of the identified informational icons that are displayed.

8. The method of claim 6 or claim 7, wherein the informational icons comprise at least one of: an email notification, a text message notification, a calendar event, and a device condition of the portable electronic device.

9. The method of any preceding claim, further comprising displaying an unlock option when the gesture continues for at least the predetermined period of time or at least the predetermined distance.

10. The method of any preceding claim, wherein the gesture comprises at least one of a gesture detected by a touch-sensitive display and a 3D spatial gesture.

11. The method of any preceding claim, wherein the display comprises a first end and a second end opposing the first end, wherein progressively illuminating comprises gradually illuminating the display beginning at the first end and continuing toward the second end.

12. The method of any preceding claim, wherein progressively illuminating comprises gradually illuminating the display beginning at a point and continuing in at least one direction away from the point.

13. The method of any of claims 6 to 12, wherein gradually displaying the identified informational icons comprises progressively decreasing transparency of the identified informational icons that are displayed.

14. The method of any preceding claim, wherein detecting continuation of the gesture comprises detecting movement of the gesture.

15. The method of any preceding claim, wherein no information is displayed on the display during the low-power condition.

16. The method of any preceding claim, wherein the gesture comprises a touch at or near a single location on the display and detecting continuation of the gesture comprises continually detecting the touch.

17. The method of any preceding claim, wherein displaying the identified informational icons comprises illuminating the informational icons without illuminating a remainder of the display.

18. An electronic device configured to perform the method of any preceding claim and comprising the display.

19. A non-transitory computer-readable medium having computer-readable code executable by at least one processor of a portable electronic device to perform the method of any one of claims 1 to 17.

## Patentansprüche

1. Verfahren, umfassend:
während sich eine tragbare elektronische Vorrichtung mit einer Anzeige (118) in einem Niedrigenergiezustand (802) befindet, Erfassen (804) einer Geste, die an einem ersten Ende der Anzeige beginnt und sich hin zu einem dem ersten Ende der Anzeige entgegengesetzten zweiten Ende fortsetzt, durch die tragbare elektronische Vorrichtung;
als Reaktion auf das Erfassen der Geste, zunehmendes Beleuchten der Anzeige (810) aus einem Zustand, in dem die Anzeige nicht beleuchtet ist, durch graduelles Erhöhen einer Größe eines beleuchteten Bereichs (306) der Anzeige von dem ersten Ende der Anzeige, an dem die Geste begonnen hat, hin zu dem zweiten Ende der Anzeige, wobei die Geste die Größe des beleuchteten Bereichs steuert;
**dadurch gekennzeichnet, dass**
der beleuchtete Bereich sich über eine gesamte Breite der Anzeige erstreckt; und
wenn die Erfassung der Geste endet, bevor die Geste einen vorbestimmten Zeitraum oder eine vorbestimmte Distanz erfüllt (812), zunehmendes Verdunkeln der Anzeige (818) und Zurückkehren in den Niedrigenergiezustand (802).

2. Verfahren nach Anspruch 1, wobei der beleuchtete Bereich unmittelbar vor dem Erfassen der Geste nicht beleuchtet ist.

3. Verfahren nach einem vorhergehenden Anspruch, ferner umfassend, beim Erfassen einer Änderung einer Richtung (816) der Geste, zunehmendes Verringern der Beleuchtung der Anzeige, während die Geste fortgesetzt wird.

4. Verfahren nach einem vorhergehenden Anspruch, wobei das zunehmende Beleuchten ein graduelles Erhöhen der Helligkeit eines auf der Anzeige angezeigten Bildes umfasst.

5. Verfahren nach einem vorhergehenden Anspruch, ferner umfassend:
wenn sich die Geste in einer ersten Richtung bewegt, zunehmendes Beleuchten der Anzeige von einem ersten Ende der Anzeige hin zu einem zweiten Ende der Anzeige;
wenn sich die Geste in einer zweiten Richtung bewegt, zunehmendes Verringern der Beleuchtung der Anzeige von dem zweiten Ende hin zu dem ersten Ende.

6. Verfahren nach einem vorhergehenden Anspruch, ferner umfassend ein Identifizieren etwaiger anzuzeigender Informationssymbole (304, 404), wobei die identifizierten Informationssymbole graduell angezeigt werden, während die Geste fortgesetzt wird.

7. Verfahren nach Anspruch 6, wobei das graduelle Anzeigen der identifizierten Informationssymbole ein zunehmendes Vergrößern einer Menge der identifizierten Informationssymbole umfasst, die angezeigt werden.

8. Verfahren nach Anspruch 6 oder Anspruch 7, wobei die Informationssymbole mindestens eines umfassen von: einer E-Mail-Benachrichtigung, einer Textnachricht-Benachrichtigung, einem Kalenderereignis und einem Vorrichtungszustand der tragbaren elektronischen Vorrichtung.

9. Verfahren nach einem vorhergehenden Anspruch, ferner umfassend ein Anzeigen einer Entsperroption, wenn die Geste für zumindest den vorbestimmten Zeitraum oder zumindest die vorbestimmte Distanz fortgesetzt wird.

10. Verfahren nach einem vorhergehenden Anspruch, wobei die Geste zumindest eine von einer durch eine berührungsempfindliche Anzeige erfassten Geste und einer räumlichen 3D-Geste umfasst.

11. Verfahren nach einem vorhergehenden Anspruch, wobei die Anzeige ein erstes Ende und ein dem ersten Ende gegenüberliegendes zweites Ende umfasst, wobei das zunehmende Beleuchten ein graduelles Beleuchten der Anzeige umfasst, das an dem ersten Ende beginnt und hin zu dem zweiten Ende fortgesetzt wird.

12. Verfahren nach einem vorhergehenden Anspruch, wobei das zunehmende Beleuchten ein graduelles Beleuchten der Anzeige umfasst, das an einem Punkt beginnt und in mindestens einer Richtung weg von dem Punkt fortgesetzt wird.

13. Verfahren nach einem der Ansprüche 6 bis 12,wobei das graduelle Anzeigen der identifizierten Informationssymbole ein zunehmendes Verringern der Transparenz der identifizierten Informationssymbole, die angezeigt werden, umfasst.

14. Verfahren nach einem vorhergehenden Anspruch, wobei ein Erfassen einer Fortsetzung der Geste ein Erfassen einer Bewegung der Geste umfasst.

15. Verfahren nach einem vorhergehenden Anspruch, wobei während des Niedrigenergiezustands keine Information auf der Anzeige angezeigt wird.

16. Verfahren nach einem vorhergehenden Anspruch, wobei die Geste eine Berührung an oder in der Nähe einer einzelnen Position auf der Anzeige umfasst und das Erfassen der Fortsetzung der Geste ein kontinuierliches Erfassen der Berührung umfasst.

17. Verfahren nach einem vorhergehenden Anspruch, wobei das Anzeigen der identifizierten Informationssymbole ein Beleuchten der Informationssymbole ohne Beleuchten eines übrigen Teils der Anzeige umfasst.

18. Elektronische Vorrichtung, die zum Durchführen des Verfahrens nach einem vorhergehenden Anspruch konfiguriert ist und die Anzeige umfasst.

19. Nichtflüchtiges computerlesbares Medium mit computerlesbarem Code, der durch mindestens einen Prozessor einer tragbaren elektronischen Vorrichtung ausführbar ist, um das Verfahren nach einem der Ansprüche 1 bis 17 durchzuführen.

## Revendications

1. Procédé comprenant les étapes consistant à :
tandis qu'un dispositif électronique portable comportant un afficheur (118) est dans une condition de faible puissance (802), détecter (804), par le dispositif électronique portable, un geste qui commence au niveau d'une première extrémité de l'afficheur et progresse vers une deuxième extrémité, opposée à la première extrémité de l'afficheur ;
en réponse à la détection du geste, éclairer progressivement l'afficheur (810) à partir d'un état dans lequel l'afficheur n'est pas éclairé, en augmentant graduellement la taille d'une zone éclairée (306) de l'afficheur à partir de la première extrémité de l'afficheur, au niveau de laquelle le geste a commencé, vers la deuxième extrémité de l'afficheur, où le geste commande la taille de la zone éclairée ;
**caractérisé en ce que** la zone éclairée s'étend sur toute la largeur de l'afficheur ; et
lorsque la détection du geste se termine avant que le geste ne satisfasse une période prédéterminée ou une distance prédéterminée (812), diminuer progressivement la luminosité de l'afficheur (818) et revenir à la condition de faible puissance (802).

2. Procédé de la revendication 1, dans lequel la zone éclairée n'est pas éclairée immédiatement avant la détection du geste.

3. Procédé de l'une des revendications précédentes, comprenant en outre, lors de la détection d'un changement de direction (816) du geste, la réduction progressive de l'éclairage de l'afficheur à mesure que le geste se poursuit.

4. Procédé de l'une des revendications précédentes, dans lequel l'éclairage progressif comprend le fait d'augmenter graduellement la luminosité d'une image affichée sur l'afficheur.

5. Procédé de l'une des revendications précédentes, comprenant en outre les étapes consistant à :
lorsque le geste se déplace dans une première direction, éclairer progressivement l'afficheur à partir d'une première extrémité de l'afficheur vers une deuxième extrémité de l'afficheur ;
lorsque le geste se déplace dans une deuxième direction, réduire progressivement l'éclairage de l'afficheur à partir de la deuxième extrémité vers la première extrémité.

6. Procédé de l'une des revendications précédentes, comprenant en outre l'identification de toute icône d'information (304, 404) à afficher, où les icônes d'information identifiées sont affichées graduellement à mesure que le geste se poursuit.

7. Procédé de la revendication 6, dans lequel l'affichage graduel des icônes d'information identifiées comprend le fait d'augmenter progressivement une quantité des icônes d'information identifiées qui sont affichées.

8. Procédé de la revendication 6 ou 7, dans lequel les icônes d'information comprennent au moins l'un parmi : une notification de courrier électronique, une notification de message textuel, un événement de calendrier, et une condition de dispositif du dispositif électronique portable.

9. Procédé de l'une des revendications précédentes, comprenant en outre l'affichage d'une option de déverrouillage lorsque le geste se poursuit pendant au moins la période prédéterminée ou sur au moins la distance prédéterminée.

10. Procédé de l'une des revendications précédentes, dans lequel le geste comprend au moins l'un parmi un geste détecté par un afficheur tactile et un geste spatial 3D.

11. Procédé de l'une des revendications précédentes, dans lequel l'afficheur comprend une première extrémité et une deuxième extrémité opposée à la première extrémité, dans lequel un éclairage progressif comprend le fait d'éclairer graduellement l'afficheur en commençant au niveau de la première extrémité et en continuant vers la deuxième extrémité.

12. Procédé de l'une des revendications précédentes, dans lequel l'éclairage progressif comprend le fait d'éclairer graduellement l'afficheur en commençant en un point et en continuant dans au moins une direction s'éloignant du point.

13. Procédé de l'une des revendications 6 à 12, dans lequel l'affichage graduel des icônes d'information identifiées comprend le fait de diminuer progressivement la transparence des icônes d'information identifiées qui sont affichées.

14. Procédé de l'une des revendications précédentes, dans lequel la détection de la poursuite du geste comprend le fait de détecter le mouvement du geste.

15. Procédé de l'une des revendications précédentes, dans lequel aucune information n'est affichée sur l'afficheur pendant la condition de faible puissance.

16. Procédé de l'une des revendications précédentes, dans lequel le geste comprend un toucher à un emplacement unique, ou près de celui-ci, sur l'afficheur et la détection de la poursuite du geste comprend le fait de détecter de façon continue le toucher.

17. Procédé de l'une des revendications précédentes, dans lequel l'affichage des icônes d'information identifiées comprend le fait d'éclairer les icônes d'information sans éclairer le reste de l'afficheur.

18. Dispositif électronique configuré pour effectuer le procédé de l'une des revendications précédentes et comprenant l'afficheur.

19. Support non transitoire lisible par ordinateur ayant un code lisible par ordinateur exécutable par au moins un processeur d'un dispositif électronique portable pour effectuer le procédé de l'une quelconque des revendications 1 à 17.
